# EUROPEAN PATENT APPLICATION

(11) **EP 1 708 085 A1**
(43) Date of publication of application: **04.10.2006**
(21) Application number: 06006703.0
(22) Date of filing: 30.03.2006
(51) Int. Cl.: G06F 9/445

(54) **Image processor**

(30) Priority: 31.03.2005 JP 2005101553
(71) Applicant: Pioneer Corporation, Tokyo 153-8654 (JP)
(72) Inventor: Ikegami, Shunji c/o Pioneer Ohmori Plant, Ohta-ku Tokyo (JP); Suzuki, Mitsuharu c/o Pioneer Ohmori Plant, Ohta-ku Tokyo (JP); Abe, Kazuya c/o Pioneer Ohmori Plant, Ohta-ku Tokyo (JP); Nagano, Yoshikazu c/o Pioneer Ohmori Plant, Ohta-ku Tokyo (JP)
(74) Representative: Manitz, Finsterwald & Partner GbR

(57) **Abstract**

An image processor has an image decoder for decoding compressed image data. The image processor also has a central processing unit for controlling the operation of the image processor, including the image decoder, in accordance with a control program. The central processing unit performs, immediately after power ON, the startup operation to cause the image decoder to decode compressed control data (i.e., compressed control program) and acquire the control program.

## Description

### BACKGROUND OF THE INVENTION

### Field of the Invention

The present invention relates to an image processor having an image decoder, such as an MPEG decoder.

### Description of the Related Art

A DVD recorder can be considered to be an image processor. In the DVD recorder, CPU (Central Processing Unit) executes the control program comprised of an OS (Operating System) and application software, to implement various operations, such as recording operation, reproducing operation and editing operation.

After power is turned ON in the DVD recorder, the startup operation is performed. During this startup operation under the control of the startup program, the CPU reads compressed control data from ROM, writes the compressed control data into RAM, sequentially decodes the compressed control data, writes it again to RAM, and creates a control program on the RAM. Then the CPU executes the control program to perform the actual operation of the DVD recorder.

It takes time until the actual operation of the DVD recorder, such as the recording operation, becomes possible since the startup operation is executed immediately after power is turned ON. This is not limited to a DVD recorder, but is the same for other image processors that have the CPU to execute the control program.

### SUMMARY OF THE INVENTION

It is one object of the present invention to provide an image processor that can decrease the time required for the startup operation immediately after power ON.

According to one embodiment of the present invention, there is provided an image processor that includes an image decoder for decoding compressed image data, and a central processing unit for controlling the operation of the image processor including the image decoder in accordance with a control program. The central processing unit performs, immediately after power ON, a startup operation to cause the image decoder to decode compressed control data in which the control program is compressed, and acquire the control program.

According to a second embodiment of the present invention, there is provided an image processor that includes a decoding unit and a central processing unit for controlling an operation of the image processor in accordance with a control program. A decoding speed of the decoding unit is faster than a decoding speed of the central processing unit. The central processing unit performs a startup operation to cause the decoding unit to decode compressed control program and obtain the control program. The central processing unit may perform the startup operation immediately after power ON of the image processor.

According to a third embodiment of the present invention, there is provided a method of making a control program to be used by a central processing unit of an image processor. The image processor has the central processing unit, a memory and a decoding unit. A decoding speed of the decoding unit is faster than a decoding speed of the central processing unit. The method includes reading compressed control program from the memory, and causing the decoding unit to decode the compressed control program to obtain the control program. The reading may be performed immediately after power ON of the image processor.

### BRIEF DESCRIPTION OF THE DRAWINGS

Fig. 1 is a block diagram depicting the configuration of the disk recorder according to one embodiment of the present invention; and
Fig. 2 is a flow chart depicting the startup operation to be executed by the CPU.

### DETAILED DESCRIPTION OF THE INVENTION

Embodiments of the present invention will now be described with reference to the drawings.

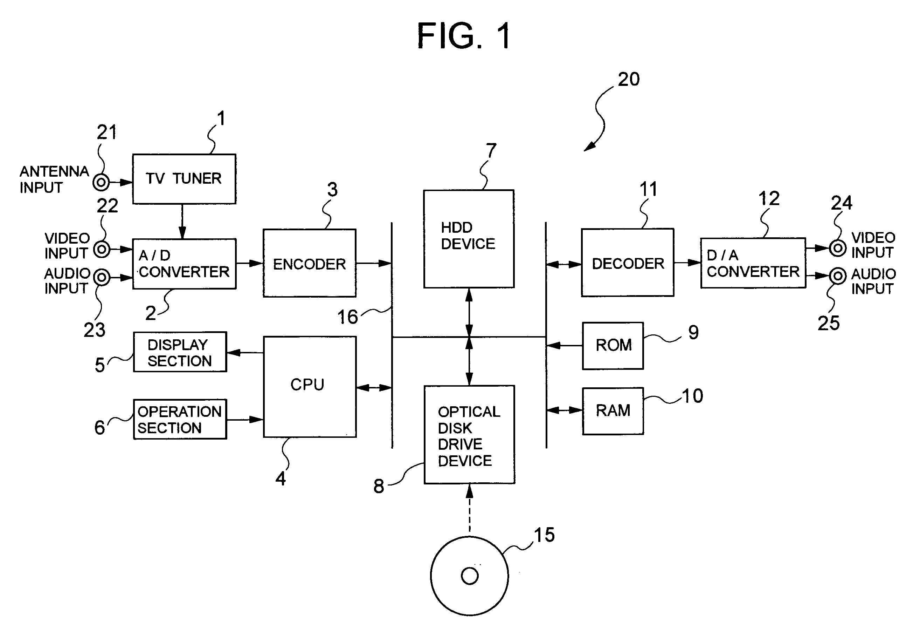

Referring to Fig. 1, an embodiment of a disk recorder 20 will be described. This disk recorder 20 includes a TV tuner 1, A/D converter 2, MPEG encoder 3, CPU 4, display section 5, operation section 6, HDD (Hard Disk Drive) device 7, optical disk drive device 8, ROM 9, RAM 10, MPEG decoder 11 and D/A converter 12.

The TV tuner 1 is connected to the antenna input terminal 21, and selectively receives TV broadcast waves via an antenna (not illustrated) connected thereto, under the control of the CPU 4. The TV tuner 1 demodulates the incoming signals and generates analog video signals and audio signals. The output of the TV tuner 1 is connected to the A/D converter 2. The A/D converter 2 digitizes the analog video signals and audio signals which are supplied from the TV tuner 1. The A/D converter 2 is connected to the external video and audio input terminals 22 and 23, and digitizes the analog video signals and audio signals supplied thereto. The output of the A/D converter 2 is connected to the encoder 3. The encoder 3 converts the digitized video signals and audio signals into compressed data in MPEG format, for example.

The encoder 3, CPU 4, HDD device 7, optical disk drive device 8, ROM 9, RAM 10 and decoder 11 are connected to the common bus 16.

The CPU 4 is a microcomputer, for example, and controls the entire disk recorder according to the predetermined control program. When the power of the disk recorder is turned ON, the CPU 4 performs the startup operation according to the predetermined startup program. The CPU 4 and the TV tuner 1 are connected by a control line (not illustrated), and the channel of the TV tuner 1 is controlled by the CPU 4.

The display section 5 and operation section 6 are connected to the CPU 4. The display section 5 displays the recording/reproducing status of the signal-receiving channel of the TV tuner 1, the HDD device 7, and the optical disk drive device 8 according to a display instruction from the CPU 4. The operation section 6 receives an input operation by the user and supplies an instruction to the CPU 4 according to the input operation.

The HDD device 7 is a storage device having a reloadable (rewritable, re-recordable) fixed disk (not illustrated), and writes the compressed data, which is supplied from the encoder 3 according to the write instruction of the CPU 4, to the internal fixed disk at an address position indicated by the write instruction. According to the read instruction of the CPU 4, the HDD device 7 reads the compressed data at a storage position, of which address is specified by the read instruction, from the fixed disk, and sends it to the bus 16.

The optical disk drive device 8 is a removable storage device, and can write the compressed data from the encoder 3 or the HDD device 7 to the optical disk 15 according to the write instruction of the CPU 4. The optical disk 15 is a DVD-R or DVD-RW, for example. The optical disk drive device 8 can also read the compressed data from the optical disk 15 according to the read instruction of the CPU 4.

In the ROM 9, the startup program has been written in advance, and compressed control data, which is compressed in MPEG format, has been written in advance. In the RAM 10, the control program, comprised of an OS (Operating System) and application software for this disk recorder 20, is written. The startup program is a program which the CPU 4 executes when the power of the disk recorder 20 is turned ON. The control program is a program acquired by decompressing the compressed control data stored in ROM 9.

The decoder 11 decompresses the compressed data which is supplied from the encoder 3, CPU 4, HDD device 7 or optical disk drive device 8 via the bus 16, and restores the data to the digital video and audio signals. The restored digital video and audio signals are supplied to the D/A converter 12. The D/A converter 12 converts the digital video and audio signals into analog vide and audio signals, and supplies them to the video and audio output terminals 24 and 25. A TV monitor (not shown) is connected to the video and audio output terminals 24 and 25. The decoder 11 decodes the compressed control data, which has been compressed in MPEG format, at the startup operation.

When the power supply button in the operation section 6 of the disk recorder 20 is operated, the CPU 4 starts the startup operation according to the startup program which is written in the ROM 9.

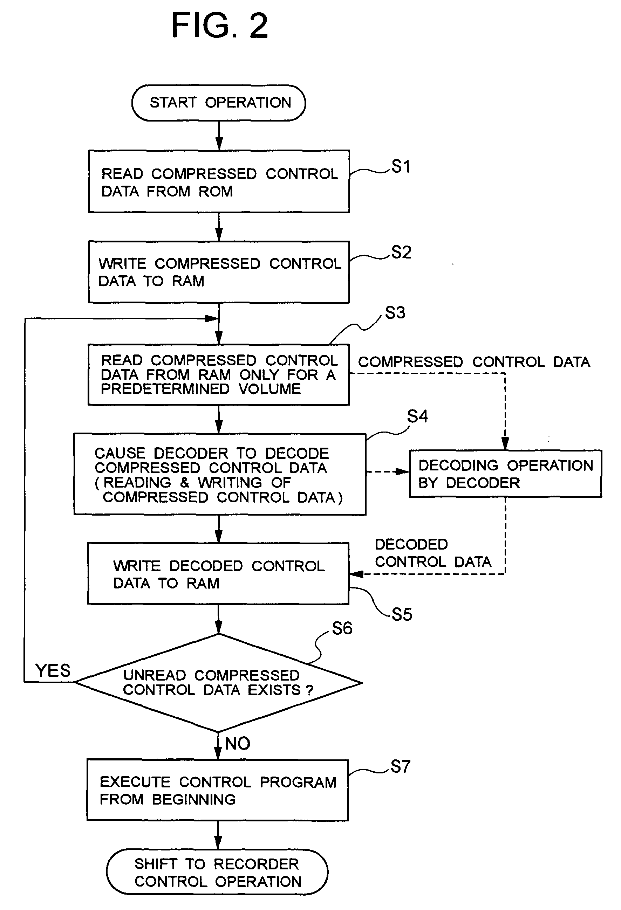

As shown in Fig. 2, the CPU 4 reads the compressed control data from the ROM 9 in the startup operation (step S1), and writes the compressed control data to the RAM 10 (step S2).

The CPU 4 reads the compressed control data from the RAM 10 for a predetermined volume (step S3), and supplies the compressed control data to the decoder 11 such that the decoder 11 decompress (decodes) it (step S4). The decoder 11 decodes the predetermined volume of compressed control data, and generates the decoded control data. When the decoded control data is output from the decoder 11, the CPU 4 writes (sends) the decoded control data to the RAM 10 (step S5). The decoded control data is written to an area (second storage area) which is different from the storage area (first storage area) of the compressed control data in the RAM 10. The CPU 4 determines whether unread compressed control data remains in the RAM 10 (step S6). If compressed control data remains, the CPU 4 returns to step S3 and repeats steps S3 to S6.

If the data volume of the final part of the unread compressed control data that remains in the RAM 10 is smaller than the predetermined volume, this data is read in step S3. The reading and writing operations of the compressed control data in step S1 and step S2 are executed while the decoder 11 is performing the decoding operation until all the compressed control data is written to the RAM 10.

When all the compressed control data in the RAM 10 is read, the decoded control data repeatedly written in the RAM 10 in step S5 creates the control program. Therefore the CPU4 reads the control program from the beginning, and starts control of the disk recorder 20 according to the control program (step S7).

In this way, in the startup operation until the control of the disk recorder 20 actually starts, not the CPU 4 but the MPEG decoder 11, installed in the disk recorder 20, executes the decoding of the compressed data stored in the ROM 9. The MPEG decoder 11 is hardware dedicated to decoding, and the decoding speed of the MPEG decoder 11 is faster than that of a general purpose CPU. Since the CPU 4 should execute only the data transfer between the ROM 9 and the RAM 10, and between the RAM 10 and the decoder 11, the time required for the startup operation can be decreased.

It should be noted that the mode of the MPEG decoder 11 when the MPEG decoder 11 decodes the compressed control data may be different from a mode of the MPEG decoder 11 when the MPEG decoder 11 decodes the video signals and audio signals.

It should also be noted that the CPU may not read the compressed control data from the ROM and may not write it to the RAM. Instead of the CPU, the MPEG recorder may perform this processing.

In the above described embodiment, the present invention is applied to a disk recorder, such as a DVD recorder, but the present invention can also be applied to an image processor other than a disk recorder, such as a PDA and portable telephone.

As described above, according to the present invention, the CPU executes the startup operation for causing the image decoder to decode the compressed control data (i.e., the compressed control program) so as to obtain the control program immediately after power ON. Therefore, the time required for the startup operation after power ON can be reduced, and the actual operation of the image processing is enabled quickly after power ON.

## Claims

1. An image processor comprising:
an image decoder for decoding compressed image data; and
a central processing unit for controlling an operation of the image processor including the image decoder in accordance with a control program, wherein the central processing unit performs, immediately after power ON, a startup operation to cause the image decoder to decode compressed control data in which said control program is compressed, and acquire said control program.

2. The image processor as defined in Claim 1, wherein the central processing unit executes said startup operation in accordance with a startup program immediately after said power ON.

3. The image processor as defined in Claim 1 or 2 further comprising a read only memory in which said compressed control data is written in advance and a random access memory, and wherein the central processing unit executes a first step of reading said compressed control data from the read only memory, a second step of writing said compressed control data into a first storage area of the random access memory, a third step of supplying said compressed control data from the first storage area to the image decoder to cause the image decoder to decode said compressed control data, and a fourth step of writing the decoded data into a second storage area of the random access memory, and the central processing unit repeatedly executes said first to fourth steps until said control program is created in the second storage area.

4. The image processor as defined in Claim 1, 2 or 3, wherein said image decoder decodes data compressed in MPEG format.

5. The image processor as defined in any one of Claims 1 to 4, wherein said control program includes an operating system and application software.

6. The image processor as defined in any one of Claims 1 to 5, wherein the image processor is a disk recorder, PDA or portable telephone.

7. The image processor as defined in any one of Claims 1 to 6, wherein the image decoder is an MPEG decoder.

8. The image processor as defined in any one of Claims 1 to 7, wherein a decoding speed of the image decoder is faster than a decoding speed of the central processing unit.

9. An image processor comprising:
a decoding unit; and
a central processing unit for controlling an operation of the image processor in accordance with a control program, wherein a decoding speed of the decoding unit is faster than a decoding speed of the central processing unit, and the central processing unit performs a startup operation to cause the decoding unit to decode compressed control program and obtain said control program.

10. The image processor as defined in Claim 9, wherein the central processing unit executes said startup operation in accordance with a startup program immediately after said power ON.

11. The image processor as defined in Claim 9 or 10 further comprising a read only memory in which said compressed control program is written and a random access memory, and wherein the central processing unit executes a first step of reading said compressed control program from the read only memory, a second step of writing said compressed control program into a first storage area of the random access memory, a third step of supplying said compressed control program from the first storage area to the decoding unit to cause the decoding unit to decode said compressed control program, and a fourth step of writing the decoded program into a second storage area of the random access memory, and the central processing unit repeatedly executes said first to fourth steps until said control program is created in the second storage area.

12. The image processor as defined in Claim 9, 10 or 11, wherein said decoding unit is an MPEG decoder.

13. The image processor as defined in any one of Claims 9 to 12, wherein said control program includes an operating system and application software.

14. The image processor as defined in any one of Claims 9 to 13, wherein the image processor is a disk recorder, PDA or portable telephone.

15. A method of making a control program to be used by a central processing unit of an image processor when the central processing unit controls the image processor, the image processor having the central processing unit, a memory and a decoding unit, a decoding speed of the decoding unit being faster than a decoding speed of the central processing unit, said method comprising:
reading compressed control program from the memory; and
causing the decoding unit to decode said compressed control program to obtain said control program.

16. The method as defined in Claim 15, wherein said reading is performed immediately after power ON of the image processor.

17. The method as defined in Claim 15 or 16, wherein said reading is reading a predetermined amount of said compressed control program at a time, and said method further comprises:
writing a predetermined amount of said compressed control program into a first storage area of a second memory of the image processor, after said reading;
supplying said predetermined amount of said compressed control program from the first storage area to the decoding unit to cause the decoding unit to decode said predetermined amount of said compressed control program; and
storing the decoded program into a second storage area of the second memory, and wherein said reading, writing, supplying and storing are repeatedly executed until said control program is created in the second storage area.

18. The method as defined in Claim 15, 16 or 17, wherein said compressed control program is compressed in MPEG format.

19. The method as defined in any one of Claims 15 to 18, wherein said control program includes an operating system and application software.

20. The method as defined in any one of Claims 15 to 19, wherein the image processor is a disk recorder, PDA or portable telephone.
